(19) **Europäisches Patentamt**

**European Patent Office**

**Office européen des brevets**

(11) **EP 0 686 098 B1**

(12) **EUROPEAN PATENT SPECIFICATION**

(45) Date of publication and mention
of the grant of the patent:
**18.11.1998 Bulletin 1998/47**

(21) Application number: **95903968.6**

(22) Date of filing: **26.12.1994**

(51) Int. Cl.$^6$: **B60C 11/13**

(86) International application number:
**PCT/JP94/02229**

(87) International publication number:
**WO 95/18022 (06.07.1995 Gazette 1995/29)**

(54) **TIRE FOR VEHICLE**

**FAHRZEUGREIFEN**

**PNEU POUR VEHICULE**

(84) Designated Contracting States:
**DE FR GB IT SE**

(30) Priority: **27.12.1993 JP 333779/93**

(43) Date of publication of application:
**13.12.1995 Bulletin 1995/50**

(73) Proprietors:
  • **Fukata, Hirohisa**
    **Kyoto 629-35 (JP)**
  • **Nomura, Yoshihiro**
    **Kyoto 629-34 (JP)**

(72) Inventors:
  • **Fukata, Hirohisa**
    **Kyoto 629-35 (JP)**
  • **Nomura, Yoshihiro**
    **Kyoto 629-34 (JP)**

(74) Representative:
    **W.P. THOMPSON & CO.**
    **Eastcheap House**
    **Central Approach**
    **Letchworth, Hertfordshire SG6 3DS (GB)**

(56) References cited:
    EP-A- 0 510 550          DE-A- 3 336 239
    DE-A- 3 609 248          FR-A- 2 470 696
    US-A- 3 727 661

  • PATENT ABSTRACTS OF JAPAN vol. 7, no. 112
    (M-215) (1257) 17 May 1983 & JP,A,58 033 504
    (SUMITOMO RUBBER IND. LTD.) 26 February
    1983

**Description**

**TECHNICAL FIELD**

This invention relates to a tire for a vehicle, and more particularly to a tire for a vehicle capable of assuredly preventing the so-called hydroplaning phenomenon.

**BACKGROUND ART**

A normal tire has grooves defined as tangentially and circumferentially extending in its tread surface.

One of the purposes for providing grooves in the tread surface is to prevent the hydroplaning phenomenon where a vehicle traveling at high speed on a road covered with water, slips and spins because of a layer of water formed between the tires and a road surface. Specifically, one of the major objects of providing grooves in the tread surface is to minimize the amount of water present between the road surface and the remaining tire surface by collecting the water into the grooves, thereby preventing the hydroplaning. The water collected in the grooves is discharged out of the grooves from the respective openings.

Of the grooves defined in the tread surface, circumferential grooves (hereinafter also referred to as "longitudinal grooves") are normally wider and deeper than tangential grooves (hereinafter also referred to as "transverse grooves"). This allows water collected by a transverse groove to be introduced into a longitudinal groove, to be discharged out of the longitudinal groove from its opening.

To what extent the grooves of the tire can prevent the hydroplaning largely depends upon the abilities of the grooves to collect water and to discharge water thus collected from the respective openings.

The ability of each groove to collect water is proportional to its capacity. The ability of each groove to discharge the collected water from its opening is proportional to a surface area of the opening. Therefore, as the proportion of grooves relative to the tread surface increases, both abilities increase. This, however, decreases the contact area between the tire and the road surface, decreasing grip performance.

Consequently, an ideal tire is one which has a large contact area with respect to the road surface for assuring a high grip performance and which defines grooves as having excellent abilities to collect water therein and to discharge water from its openings.

For such an ideal tire to be realized, there have been proposed various tires having different groove patterns.

It is generally considered that the provision of longitudinal groove with an unchanged width and an increased depth, in particular, would be effective in enhancing the ability to collect water while maintaining grip performance. Hence, this is generally and widely practiced.

Also, there has been proposed a tire having a herringbone-like pattern where a wide, deep and straight longitudinal groove is provided as extending centrally around the tire and inclined V-shape transverse grooves are formed on opposite shoulders of the longitudinal groove so that water collected by the transverse grooves can be efficiently introduced into the longitudinal groove and efficiently discharged out of the tire from the opening of the longitudinal groove (see Japanese Patent Unexamined Publication No. 5-178019 (1993), page 2, second column, lines 18-22).

Further, there has been proposed another type of tire wherein a longitudinal groove formed in a tread surface has a web therein which extends from the bottom of the longitudinal groove to a road surface, and when the tire rotates, the web removes a water layer ahead of the tire in the rear of the tire to reduce the amount of water in a contact area between the tire and the road, thereby preventing hydroplaning (see Japanese Patent Unexamined Publication No. 48-6402 (1973), page 2, upper right column line 2 to lower left column line 3).

However, a study carried out by the inventors has found that none of the aforementioned conventional tires can prevent the holding of water being a factor in causing hydroplaning, thus failing to prevent the hydroplaning.

The higher the rotation speed of a tire is, the less time is allowed for the tire to discharge water in the grooves. As a result, the tire makes one revolution before fully discharging the water, returning the retained water ahead of the tire (which is called "holding of water by groove").

If the holding of water occurs, water is accumulated between the tire and the road surface, whose amount exceeds the water present in the road surface. Then, if the amount of water thus accumulated exceeds the abilities of the groove to collect water and to discharge the water thus collected from the openings, a thicker layer of water is formed between the tire and the road surface to cause the hydroplaning.

The inventors have studied the effect of the holding of water on the conventional tires of the herringbone-like pattern and the like, and have had the following findings. As a tire has a narrower, deeper groove, it has a lower ability to discharge collected water out of the grooves from its opening, thus requiring a longer time. Particularly, as the rotation speed of the tire increases, the groove holds more water, canceling the action of the groove pattern to prevent hydroplaning, as previously described.

It was also found that a tire involved in the holding of water suffers from an increased rolling resistance due to the presence of a large amount of water in the direction of traveling.

On the other hand, in the tire provided with the web, the longitudinal groove is divided by the web, so that the capacity of each divided longitudinal groove is restricted. This shows that if the amount of water present on a road exceeds the aforesaid limited capacity, or if water whose amount exceeds the aforesaid capacity flows into the longitudinal groove through the transverse groove communicated therewith, the aforesaid web's action on the road surface is canceled, causing the hydroplaning.

It is, therefore, the object of this invention to provide a tire for a vehicle that prevents grooves from holding water, to realize a more reliable prevention of hydroplaning and to reduce rolling resistance, particularly when traveling in rain.

## DISCLOSURE OF THE INVENTION

To attain the aforesaid object, the present invention provides a vehicle tire wherein, of the grooves formed in the tread surface thereof, at least one circumferential groove has a continuously waved bottom surface, which extends partially or entirely along the circumference of the groove and the top of which does not reach the tread surface, characterised in that some or all of the grooves formed in the tread surface of the tire are treated to have water repellency on at least a part of the bottom and/or side surfaces thereof.

Preferably, the treated grooves include the circumferential groove having the continuously waved bottom surface.

Preferably, the waved bottom surface extends over the entire width of the circumferential groove.

Although not particularly limited to the following, the waved bottom surface is preferably in a wave form selected from a sine wave form, a square wave form, a chopping wave form and a trapezoidal wave form.

The wave form is not particularly limited in size but preferably has a wave height ranging from 1 to 4 mm and a wave length ranging from 1 to 150 mm.

To treat the bottom or the side surfaces of the groove as having water repellency, it is desirable to form a coating film containing a water repellent resin thereon, to affix a sheet containing a water repellent resin thereto, or to form groove-defining portions by a rubber compound containing a water repellent resin at the time of vulcanization and forming of the tire.

According to the knowledge of the inventors, the holding of water by grooves results from that when a vehicle is traveling at high speed, water rapidly compressed by its tire and a road surface behaves like solid matter in a groove, thus making it difficult to discharge water out of the tire from an opening of a longitudinal groove.

Even under the condition where the holding of water occurs, there is a flow of water in the longitudinal groove. That is, water in the longitudinal groove rotates in the same direction with a little delay relative to the rotation of the tire by inertial force due to the rotation of the tire, resulting in a difference in rotary speed between the two. This allows the water to flow in the longitudinal groove.

Therefore, if at least the bottom of the longitudinal groove comprises a continuously waved bottom surface whose top does not reach the tread surface, which extends partially or entirely along the circumference of the groove, and some or all of the grooves formed in the tread surface of the tire are treated to have water repellency on at least a part of the bottom and/or side surfaces thereof, a wave form of the waved bottom surface, in association with the rotation of the tire, serves to impart a flow of water in the longitudinal groove with a wave motion directed radially outwardly of the tire. The impact of the wave motion divides the water held in the groove into small lumps. Then, the water is rapidly discharged out of the groove by the wave motion and the centrifugal force due to the rotation of the tire.

As the rotation speed of the tire increases, less time is allowed to discharge water in the groove, whereas the frequency of the wave motion generated by the wave form increases, as previously described. Consequently, the water held in the - groove is divided into further smaller lumps compared to the case where the tire rotates at lower speed, and then rapidly discharged out of the groove by a greater centrifugal force. As a result, almost the same effect may be obtained at high or low speeds.

Therefore, the tire of this invention can assuredly prevent hydroplaning and reduce its rolling resistance.

If the top of the waved bottom surface of the longitudinal groove is level with the tread surface, the flow of water in the longitudinal groove is hindered, thus failing to develop the aforesaid effect of the wave form. In addition, such a construction would suffer the same problem as in the aforesaid tire having webs. Accordingly, it is essential that the top of the waved bottom surface does not reach the tread surface in order not to hinder the flow of water in the longitudinal groove.

As some or all of the grooves formed in the tread surface including the longitudinal groove are treated such that at least a part of the bottom and/or a part of the side surfaces has water repellency, surface tension inherent to water may promote water in the groove turning into droplets. Therefore, the water may be discharged out of the groove even faster. This further increases the effects of preventing the hydroplaning and of decreasing rolling resistance.

As a similar construction to the tire for a vehicle of this invention, Japanese Patent Unexamined Publications No. 5-238210 (1993) and No. 5-238211 (1993) disclose a tire wherein side surfaces of a longitudinal groove are formed as having a waved surface.

With this construction, however, the wave motion imparted to water in the groove is not directed radially outwardly of the tire but toward a direction orthogonal to the above direction, and therefore the effect of discharging water out of the groove is insufficient.

US Patent No. 3727661 (1973) discloses a tire wherein at least a circumferential groove has a continuously waved bottom surface which extends partially or entirely along the circumference of the groove, whereby the waved bottom surface extends over the entire width of the bottom of the groove. The shape of the groove is in a square (rectangular) wave form wherein the wave height and length range from 1.6 to about 4 mm and from 3.18 mm to double the groove width (up to a maximum of 150 mm), respectively.

Japanese Utility Model Unexamined Publication No. 5-76804 (1993) discloses a tire wherein plural projections for use as a spike are provided at regular intervals on a longitudinal groove (a groove for water discharge) extending centrally around the width of a tread surface of the tire.

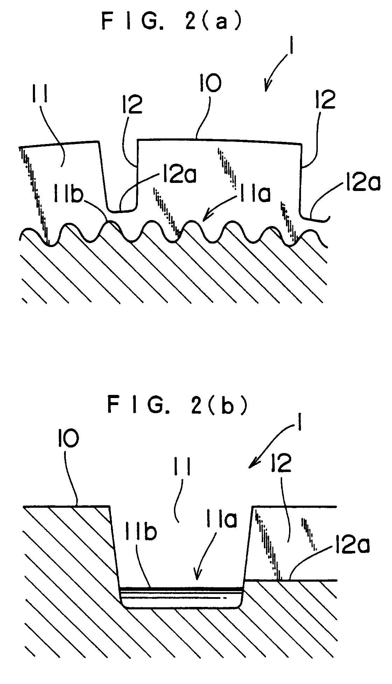

With this construction, however, the projections for use as a spike are not provided in a continuous form as shown in Fig. 2 of the aforesaid Publication. There would therefore be no wave motion effective to divide water held in the groove into small lumps, resulting in little effect of discharging water out of the groove.

Japanese Patent Unexamined Publication No. 6-239108 (1994) discloses a tire wherein a projection for preventing pebble clogging (a projection against pebble clogging) is formed on the bottom of a longitudinal groove, while a projection (a transverse projection) for assisting the aforesaid projection against pebble clogging is formed on a side surface of the same.

Both kinds of projections, however, are not provided over the entire width of the bottom of the longitudinal groove. Therefore, some portions of the water flow in the groove are imparted with a wave motion while the rest is not, resulting in insufficient effect of discharging water out of the groove.

As stated above, with any of the conventional tire constructions, it is impossible to obtain the same effect as in this invention.

## BRIEF DESCRIPTION OF THE DRAWINGS

Fig. 1 is an enlarged perspective view illustrating a longitudinal groove as a principal part of the tire for vehicle of this invention.

Fig. 2(a) is a cross-sectional view illustrating the above longitudinal groove. Fig. 2(b) is a longitudinal section illustrating the above longitudinal groove.

Fig. 3(a) is a further enlarged longitudinal section illustrating the wave form at a waved bottom surface of the above longitudinal groove. Figs. 3(b) and 3(c) are each a longitudinal section illustrating another example of the wave form of the waved bottom surface of the longitudinal groove.

Figs 4(a) and 4(b) are each a longitudinal section illustrating another example of the groove form of the longitudinal groove.

Fig. 5(a) to 5(d) are each a longitudinal section illustrating a state where the bottom surface of the longitudinal grooves being in a wave form is treated as having water repellency.

Fig. 6 is a schematic diagram illustrating an apparatus used for the measurement of the water discharge ability of each tire for vehicle of Examples and Comparative Examples.

Fig. 7 is an elevation view illustrating another apparatus used for the measurement of the water discharge ability of each tire for vehicle of Examples and Comparative Examples.

Fig. 8 is a sectional view illustrating a pail for collecting water discharged from grooves of a tire which is included in the apparatus in Fig. 7.

Fig. 9 is a side view illustrating a state where a brush of the apparatus in Fig. 7 is brought into contact with a tire and a roller.

## BEST MODE FOR CARRYING OUT THE INVENTION

The vehicle tire of this invention will be described with reference to the drawings illustrating an example thereof.

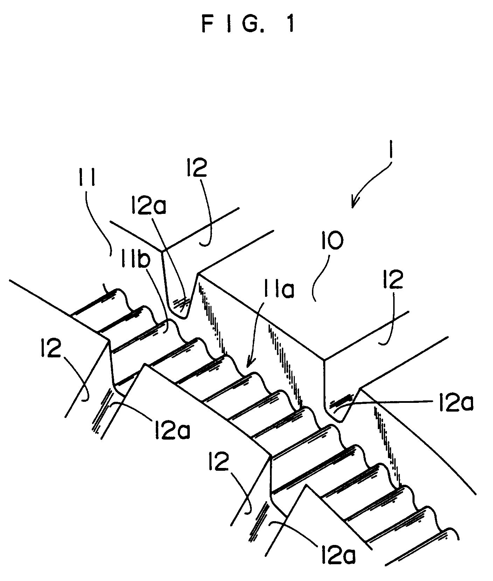

As shown in Fig. 1, 2(a) and 2(b), a vehicle tire 1 of this invention includes, in its tread surface 10, a longitudinal groove 11 extending in the circumferential direction and a transverse groove 12 extending in the tangential direction. In the example shown, a bottom 11a of the longitudinal groove 11 is in the form of a continuous wave.

The bottom of the transverse groove 12 is not in the form of a wave, but if necessary, every bottom of the grooves on the tread surface 10 including the longitudinal groove 11 and the transverse groove 12 may be in the form of a wave. However, as evident from the aforesaid principle of discharging water present in the groove, the formation of such waved surface is most effective for the longitudinal groove 11.

In view of the effect of discharging water, the longitudinal groove 11 may preferably have a wave form surface extending over the entire width of the bottom 11a.

Again in view of the effect of discharging water, the longitudinal groove 11 may preferably have a wave form surface extending over the entire circumference of the bottom 11a. Depending on the case, however, the wave form need not necessarily be provided over the entire circumference of the bottom 11a of the longitudinal groove 11. More specifically, the bottom 11a of the longitudinal groove 11 may include a waved surface portion and a flat surface portion arranged either in a regular order or at random, thus being an intermittent wave.

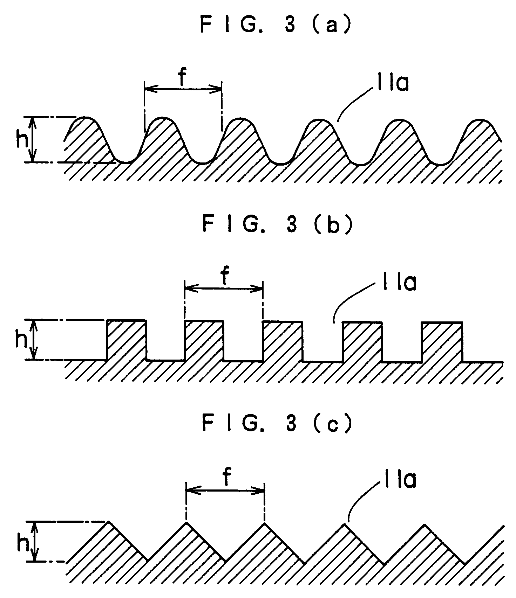

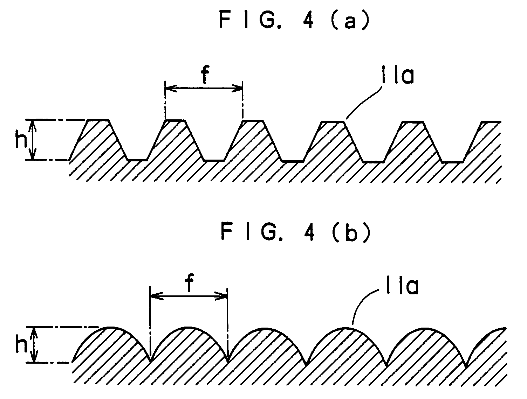

Examples of the wave form include a square wave, a chopping wave and a trapezoidal wave, each occurs regularly, as shown in Figs. 3(b), 3(c) and 4(a) as well as a sine wave shown in Figs. 1 and 3(a), which are preferred in terms of processibility.

Besides the above known examples, various successive forms may be employed such as a combination of the waves shown in Figs. 3(a) to 3(c) and Fig. 4(a). A typical pattern is one comprising the sine wave and the chopping wave as shown in Fig. 4(b).

As described above, the top 11b of the waved surface must be arranged so as not to reach the tread surface 10. Although its wave height (designated by reference character h in Figs. 3(a) to 3(c) and Figs. 4(a) and 4(b)) is not particularly limited in this invention, it is preferably in a range of from 1 to 4 mm. If the wave height exceeds 4 mm, it might accelerate the holding of water, particularly at high rotation speed, likewise in the groove having the web. On the other hand, if the wave height is less than 1 mm, wave motion produced in the groove might be too weak to offer a sufficient effect of dividing water in the groove into small lumps.

It is particularly preferable that the wave height is in a range from 2 to 3.5 mm, more preferably a range from 2 to 3 mm.

Since the longitudinal groove 11 is required to be deeper than the transverse groove 12 such that water collected by the transverse groove 12 may flow thereinto, the top 11b of the waved surface on the bottom 11a of the longitudinal groove 11 is preferably lower than the bottom 12a of the transverse groove 12, as shown in Figs. 1, 2(a) and 2(b).

The wave height of the wave form surface is preferably made constant for a simplified construction, but if the wave form surface is also provided on other grooves than the longitudinal groove 11, whose wave height may differ depending on its depth and action. It is also possible to modify the wave height within a single groove.

The wave length of the wave form surface (designated by reference character **f** in Figs. 3(a) to 3(c) and 4(a) and 4(b)) is preferably in a range of from 1 to 150 mm. If the wave length exceeds 150 mm, the frequency of a wave motion produced in the groove might be too low to offer a sufficient effect of dividing water into small lumps. On the other hand, if the wave length is less than 1 mm, the frequency of a wave motion produced particularly at high rotation speed might be too high to offer the sufficient effect of dividing water into small lumps.

It is particularly preferable that the wave length of the wave form surface ranges from 1 to 50 mm, more preferably from 5 to 15 mm.

The wave length of the wave form is preferably made constant for a simplified construction, but if the wave form surface is also provided on the bottoms of other grooves than the longitudinal groove 11, the respective wave length of the grooves may differ depending on its depth and action.

In particular, the wave length of the wave form surface on the bottom 11a of the longitudinal groove 11 is closely related to the rotation speed of the tire. If the wave length is constant throughout the wave form surface, there is a possibility that the wave motion generated from the wave form surface will be synchronized with the rotation speed of the tire and the frequency of water vibration, thus lowering the effect of dividing water into small lumps. To overcome this problem, the wave length of the wave form surface on the bottom 11a of the longitudinal groove 11 may be varied regularly or irregularly, or otherwise, several kinds of wave form surfaces having different lengths may be provided in parallel on the bottom 11a of the longitudinal groove 11. If the bottom 11a of the longitudinal groove 11 has an intermittent wave form surface as described above, the respective wave length of the wave form surface portions may differ.

In view of efficiency and productivity, it is desired to form the waved bottom surface of the groove at the time of the formation of a rubber tire by arranging that in a mold for vulcanization and forming of the tire, the surface of a portion to be groove is in a wave form. Otherwise, the bottom of the groove may have a wave surface by cutting the corresponding portion to be a groove in a formed tire, or by affixing a wave-formed rubber belt to the bottom of the groove.

In order to conduct a water-repellent treatment to at least a part of the bottom or a part of side surfaces of some or all of the grooves formed in the tread surface including the groove having the waved bottom surface, the corresponding part to be a groove may be composed of a water repellent resin.

As a specific example of the water repellent treatment, any of the following methods (A) to (C) is appropriate.

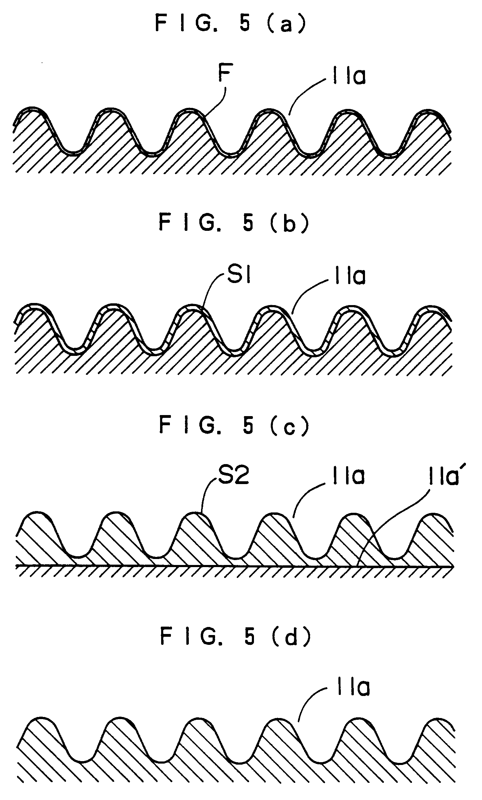

(A) As shown in Fig. 5(a), for example, a coating film F containing a water repellent resin is formed on the corresponding portion to be treated as having water repellency (i.e. the waved bottom surface 11a of the groove shown).

(B) As shown in Fig. 5(b), for example, a sheet S1 containing a water repellent resin is affixed to the corresponding portion to be treated as having water repellency (i.e. the bottom 11a).

(C) As shown in Fig. 5(d), for example, when a tire is vulcanized and formed, the corresponding portion to be treated as having water repellency (i.e. the bottom 11a) is composed of a rubber compound containing a water repellent resin.

The coating film F used in the method (A) is formed by applying a coating agent wherein the water repellent resin is dissolved or dispersed in an appropriate solvent, to the corresponding portion to become a groove in a rubber tire produced beforehand, followed by drying. If a curing-type coating agent is used, the coating agent may be cured by heating or irradiation of ultraviolet rays during or after drying.

Examples of water repellent resins for use in the coating film include a silicone resin, a fluorine resin such as polytetrafluoroethylene, and an ultra-high polymeric polyethylene.

The coating film is not particularly limited in thickness, but has a preferable thickness ranging from 5 to 800 $\mu$m. If the thickness of the coating film is less than the aforesaid range, a sufficient water repellency might not be obtained. No problems occur when traveling on a normal road, but when traveling on a rough road or off-road, there is a fear that the coating film frays in a very short period of time, losing its water repellency. On the other hand, if the thickness of the coating film exceeds the aforesaid range, there is a fear that the coating film becomes rigid and fails to fully follow the rubber deformation to cause a crack or a peel, losing its water repellency.

It is particularly preferable that the thickness of the coating film is in a range of from 8 to 800 $\mu$m, more preferably from 20 to 800 $\mu$m.

The above method (A) has the advantage of easier operation because its water repellency can be obtained merely by applying a coating agent to form a coating film. This method also has the advantage that even when the water repellent effect is lost due to the fray of the coating film, such effect can be restored by applying the coating agent again to form a new coating film.

As for the sheet S1 used in the method (B), a sheet prepared by the following manner may be employed. Specifically, a mixture containing a water-repellent resin and an additive such as stabilizer, if necessary, is formed into a sheet and is cut into a proper size.

Water repellent resins for use in the sheet are preferably rubber resins such as silicone rubber and fluorine rubber, which allow the sheet to follow the rubber deformation.

The sheet is not particularly limited in thickness, but has a preferable thickness ranging from 0.04 to 1 mm. If the thickness of the sheet is less than the aforesaid range, it might be impossible to impart sufficient durability to the sheet, causing a fray of the sheet in a very short period of time, losing its water repellency. If the thickness of the sheet exceeds the aforesaid range, there is a fear that the sheet becomes rigid and fails to fully follow the rubber deformation to cause a crack or a peel, losing its water repellency.

Where the sheet S1 is affixed to the waved bottom 11a of the groove as shown in Fig. 5(b), if the wave length of the wave form is too short or if the sheet is too thick, it would be difficult to easily affix the sheet to the surface of a small wave form. To overcome this problem, a sheet preliminarily made in the form of the wave corresponding to the waved surface may be used. Alternatively, as shown in Fig. 5(c), the surface of a sheet S2 to be affixed thereto may be in the form of the wave. In this case, the surface of the sheet 2 substitutes for the waved bottom 11a of the groove instead of the bottom 11a'.

For affixing the sheet to the bottom of the groove, an adhesive particularly effective in making a water repellent resin adhere to rubber may be selected from various known adhesives.

The sheet thus obtained has the advantages of higher durability than the coating film. In addition there is the advantage that when the sheet has a crack or a peel, a new sheet can be affixed to the portion of the crack or the peel, thereby restoring its water repellency.

In the method (C) where the portion to be imparted with water repellency is composed of a rubber compound containing a water repellent resin when the tire is vulcanized and formed, it is preferable to add powder of the water repellent resin into the same rubber compound used in other members of the tire instead of a carbon black, for example, or to mix thereto water repellent resin having a good compatibility with the rubber compound. Alternatively, a rubber compound mainly composed of the aforementioned water repellent rubber may be used.

The water repellent surface formed by said method (C) has the advantage of even higher durability than the coating film or the sheet.

The methods (A) to (C) may be used in combination. For example, if a surface treated as having water repellency by the method (C) is further formed with the coating film of the method (A) or further affixed with the sheet of the method (B), its water repellency may last even longer. Alternatively, any of the methods (A) to (C) may be selected and used depending on the portion given the water repellency treatment.

The constitution of this invention is applicable to every kind of tire for vehicle having grooves in its tread surface such as a tire having a normal tube, a tubeless tire and a solid tire. This constitution may be most effectively applied to a tire for use in automobiles that travel on a road at high speed, but it is also applicable for example to a rubber tire for use in various vehicles including those used in the landing gear of aircraft new traffic systems or monorails, those for agricultural use such as tractors and those for industrial use such as machine tools, and bicycles, among others.

The groove pattern of the tread surface is not particularly limited. In addition to a typical pattern comprising the longitudinal groove and the transverse groove, there may be employed a variety of patterns including one where, as described above, there is no change in the width of the longitudinal groove but its depth is increased, or one where a wider, deeper straight line-like longitudinal groove is formed at the center of the tire and also V-shaped transverse grooves are formed as inclined on opposite shoulders of the longitudinal groove.

If the constitution of this invention is applied to such groove patterns being devised to improve the water collecting ability of the groove, it is possible to further improve the ability of the groove to discharge collected water from its opening while avoiding the holding of water by the groove, which has not been solved by the known tires. Accordingly, this invention is more effective in the prevention of hydroplaning.

## INDUSTRIAL APPLICATION

According to the tire for vehicle of this invention, as detailed previously, the waved surface which is provided in at least some or all parts of the bottom of the longitudinal groove, divides water in the groove into small lumps, allowing the water to be promptly discharged out of the groove. Therefore, the tire for vehicle of this invention can prevent a groove from holding water to effect a reliable prevention of the hydroplaning, particularly when traveling in rain, and to reduce the rolling resistance of the tire.

## EXAMPLES

This invention will be described with reference to Examples and Comparative Examples, which are shown by way of example.

### Comparative Example 1

A synthetic rubber was formed and vulcanized to prepare a synthetic rubber belt whose surface is in the form of a sine wave of 4 mm wide, 3.5 mm thick(max.), 3 mm in wave height **h** and 5 mm in wave length **f**.

Using a synthetic rubber adhesive(Tradename "Bondo Sokkan G Kuriya", manufactured by Konishi Co., Ltd.), the belt was affixed to the bottom of a longitudinal groove (4 mm wide, 6 mm deep) of a commercially available tire for automobile (Tradename "SCIENCE S-780" whose diameter is 500 mm, manufactured by The Yokohama Rubber Co. Ltd.) over the entire circumference thereof. A tire of Comparative Example 1 was obtained wherein a sine wave was formed on the bottom of the longitudinal groove over its entire circumference.

### Example 1

A coating agent containing a silicone resin (Tradename "TSE322", manufactured by Toshiba Silicone Co. Ltd.) was applied to the bottom and both side surfaces of a longitudinal groove of a tire wherein the sine wave was formed, in the same manner as in Comparative Example 1, on the bottom of the longitudinal groove over its entire circumference (wave height h and wave length **f** were the same as in Comparative Example 1), and then the coating agent thus applied was dried to form a coating film (100 μm thickness). A tire of Example 1 was thus obtained wherein the bottom and both side surfaces of the longitudinal groove was treated as having water repellency.

The following Comparison Test 1 was conducted on the tires of Example 1, Comparative Example 1 and an unprocessed tire for comparison (**Comparative Example 2**) wherein the bottom of a longitudinal groove was flat and neither the bottom nor side surfaces thereof were treated as having water repellency, to evaluate the respective characteristics.

### *Comparison Test 1*

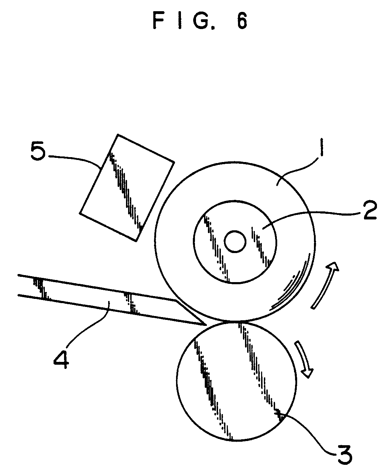

As shown in Fig. 6, a tire 1 of each sample was mounted on a rotation wheel 2, and a roller 3 made of polyurethane rubber (250 mm in diameter, 120 mm wide) was pressed thereagainst from downward so that the distance between the shafts of the two became 4 mm shorter than the distance when the two came in contact with each other.

While maintaining this pressed state, the tire 1 and the roller 3 were rotated respectively in the directions shown by arrows in the figure with the number of revolutions of the tire 1 set at 970 r.p.m. (equivalent to 80 km/h). When the rotation was stable, while feeding 13 liters of water per minute between the tire 1 and roller 3 by means of a gutter 4 (size of the feed port: 5 mm high, 90 mm wide), a pail 5 (size of the opening: 230 mm long, 230 mm wide) was placed 5 mm forward of the tire 1 to measure the amount of water (cc) collected by the pail 5 in 30 seconds.

The test results are given in Table 1.

A decrease in the rate of water (%) with respect to each of Example 1 and Comparative Example 1, based on the result of Comparative Example 2 was obtained by the following equation. The results are also given in Table 1.

$$DR\ (\%) = \frac{(CE2) - (E)}{(CE2)} \times 100$$

wherein **DR** denotes the decrease rate of water, **CE2** denotes the amount of water collected in Comparative Example 2, and **E** denotes the amount of water collected in Example 1 or Comparative Example 1.

TABLE 1

|  | Water (cc) | Decrease rate (%) |
|---|---|---|
| Comp. Example 1 | 576 | 14 |
| Example 1 | 482 | 28 |
| Comp.Ex.2 | 670 | - |

As shown in Table 1, both Comparative Example 1 and Example 1 collected much less water in the pail than Comparative Example 2. This shows that both tires of Example 1 and Comparative Example 1 are excellent in discharging water out of the groove and that both can significantly reduce the amount of water which is not discharged from the groove but is transmitted forward in the rotational direction.

If comparison is made between Example 1 and Comparative Example 1, Example 1 wherein a water repellent coating film was formed on the bottom and both side surfaces of the groove, collected less water than Comparative Example 1, resulting in a greater decrease rate of water (%) than Comparative Example 1. This shows that Example 1 is more efficient in discharging water.

Next, a full-scale Comparison Test 2 (described later) was conducted on Comparative Example 2 and the following Examples to evaluate the respective characteristics more specifically.

**Comparative Example 3**

Using a commercially available rubber tire for automobiles being the same type as used in Example 1 and Comparative Example 1, the bottom of a longitudinal groove was shaved by 4 mm wide and 3 mm deep over its entire circumference, to which an unvulcanized synthetic rubber belt (4 mm wide, 3 mm thick) was affixed using a rubber glue of the same type.

Then, the belt was subjected to press molding using a mold and was vulcanized to prepare a tire of Comparative Example 3 wherein the bottom surface of the longitudinal groove was in the form of a sine wave (2 mm in wave height **h**, 5 mm in wave length **f**) as shown in Figs. 1, 2(a), 2(b) and 3(a).

**Comparative Example 4**

A tire of Comparative Example 4 was prepared in the same manner as in Comparative Example 3, except that the wave length **f** of the sine wave was varied to 15 mm using another mold for press molding. Its wave height **h** was the same as Comparative Example 3.

**Example 2**

A coating agent containing a silicone resin (Tradename "TUV6000", manufactured by Toshiba Silicone Co. Ltd.) was applied to the bottom and both side surfaces of a longitudinal groove of a tire wherein a sine wave (wave height **h** and wave length **f** were the same as in Comparative Example 3) was formed in the same manner as in Comparative Example 3. Then the coating agent was cured by irradiation of ultraviolet rays to form a coating film (100 μm in film thick), thus preparing a tire of Example 2 wherein the bottom and both side surfaces of the longitudinal groove were treated as having water repellency.

**Example 3**

A coating agent containing a silicone resin (Tradename "TUV6000", manufactured by Toshiba Silicone Co. Ltd.) was applied to the bottom and both side surfaces of a longitudinal groove of a tire wherein a sine wave (wave height **h** and wave length **f** were the same as in Comparative Example 4) was formed in the same manner as in Comparative Example 4. Then the coating agent was cured by irradiation of ultraviolet rays to form a coating film (100 μm in film thick-

ness). There prepared a tire of Example 2 wherein the bottom and both side surfaces of the longitudinal groove were treated as having water repellency.

The following Comparison Test 2 was conducted on the above Examples and Comparative Examples for comparison, to evaluate the respective characteristics.

*Comparison Test 2*

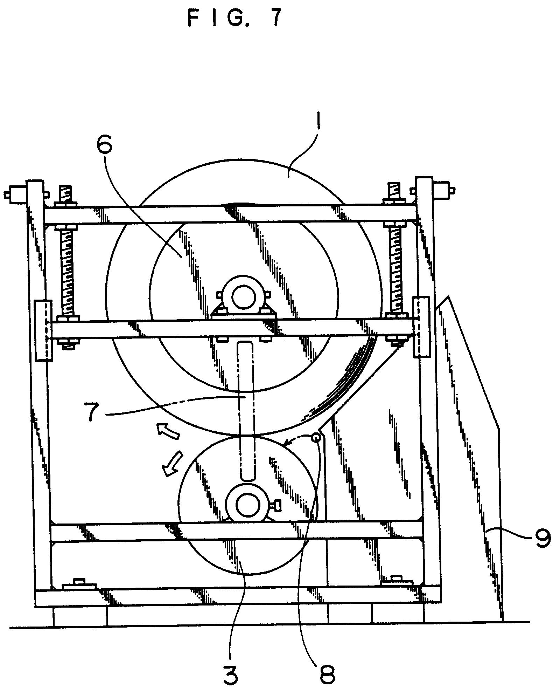

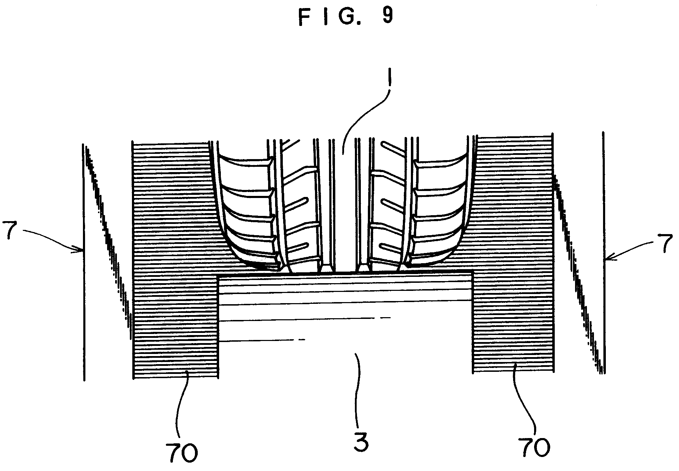

As shown in Fig. 7, a tire 1 of each sample was mounted on a rotation wheel 6, and the aforesaid roller 3 was pressed against the tire from below so that the distance between the shafts of the two became 13 mm shorter than the distance when the two came in contact with each other. Further, as shown in Fig. 9, bristle 70 of a brush 7 was brought into contact with the tire 1 and the roller 3 at opposite lateral sides thereof, so as to prevent water fed from a pipe 8 (described later) from flowing out over the lateral surfaces of the tire 1 and the roller 3.

While maintaining this pressed state, the tire 1 and the roller 3 were rotated at a constant speed in the directions shown by arrows in the figure. When the rotation was stable, 13 liters of water per minute was fed between the tire 1 and the roller 3 from a feed port provided laterally of a polyvinylchloride pipe 8 (13 mm in the inner diameter of the pipe, size of the feed port: 5 mm high, 90 mm wide) for five minutes, as shown by an arrow of the alternate long and short dashes in the figure.

Then, measurement was performed for the amount of water (cc) collected by a pail 9 (size of the opening: 345 mm long, 200 mm wide) being placed 5 mm forward from the tire 1.

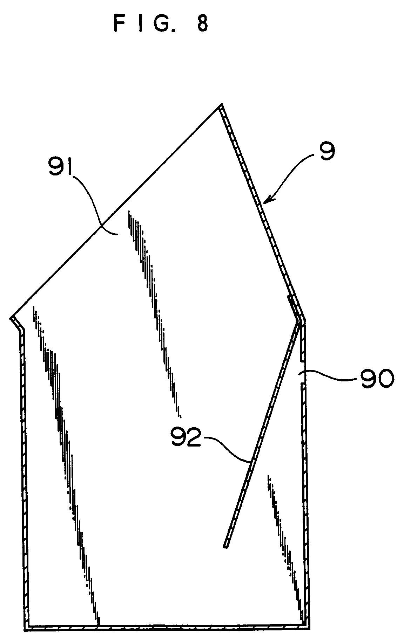

The pail 9 includes, as shown in Fig. 8, a vent 90 for an efficient collection of water from the tire 1, which is disposed on the rear side thereof, and a cover plate 92 for preventing water collected by the pail 9 from escaping from the vent 90, which is disposed between an opening 91 and the vent 90.

By setting a rotation speed of the tire 1 at the following values to obtain its measurements:

measurements at 845 r.p.m. (equivalent to 79.6 km/h) are given in Table 2, those at 1011 r.p.m. (equivalent to 95.2 km/h) in Table 3, those at 1127 r.p.m. (equivalent to 106.0 km/h) in Table 4, and those at 1272 r.p.m (equivalent to 119.8 km/h) in Table 5. Every table accompanies the decrease rate of water (%) for each Example and Comparative Example, which was obtained from the aforesaid equation based on the result of Comparative Example 2.

Table 2

|  | Water (cc) | Decrease rate (%) |
|---|---|---|
| Comp. Example 3 | 1533 | 33.2 |
| Comp. Example 4 | 1450 | 36.8 |
| Example 2 | 698 | 69.6 |
| Example 3 | 1250 | 45.5 |
| Comp.Ex.2 | 2295 | - |

Table 3

|  | Water (cc) | Decrease rate (%) |
|---|---|---|
| Comp. Example 3 | 1570 | 35.9 |
| Comp. Example 4 | 1460 | 40.4 |
| Example 2 | 550 | 77.6 |
| Example 3 | 1275 | 48.0 |
| Comp.Ex.2 | 2450 | - |

Table 4

|  | Water (cc) | Decrease rate (%) |
|---|---|---|
| Comp. Example 3 | 1590 | 37.0 |
| Comp. Example 4 | 1550 | 38.6 |
| Example 2 | 528 | 79.1 |
| Example 3 | 1300 | 48.5 |
| Comp.Ex.2 | 2523 | - |

Table 5

|  | Water (cc) | Decrease rate (%) |
|---|---|---|
| Comp. Example 3 | 1610 | 37.8 |
| Comp. Example 4 | 1600 | 38.2 |
| Example 2 | 509 | 80.3 |
| Example 3 | 1400 | 45.9 |
| Comp.Ex.2 | 2590 | - |

The following is noted by inspection of Tables 2 to 5.

Both tires of Examples 2 and 3 collected less water in the pail than Comparative Examples 2 to 4 at any one of the aforesaid speeds. This shows that Examples 2 and 3 are excellent in discharging water out of the groove and can significantly reduce the amount of water which is not discharged from the groove but is transmitted forward in the rotational direction.

From the results of Comparative Examples 3 and 4 having the respective sine wave forms wherein the wave height **h** was the same but the wave length **f** was varied, it is clear that the wave length **f** is preferably between 5 and 15 mm.

Further, from the comparison between Comparative Example 3 and Example 2, or between Comparative Example 4 and Example 3, it is clear that Examples 2 and 3 each having the coating film provided on both bottom and the side surfaces of the longitudinal groove, collected less water and exhibited a larger decrease rate of water (%) than Comparative Examples 3 and 4, thus being far better in discharging water out of the groove.

**Comparative Example 5 and Example 4**

A tire of Comparative Example 5 was prepared in the same manner as in Comparative Example 3, except that by changing the mold a square wave (2 mm in wave height **h**, 5 mm in wave length **f**) was used for press molding, on the bottom 11a, as shown in Fig. 3(b).

A tire of Example 4 was prepared by forming the same coating film (100 $\mu$m in film thickness) as in Example 2 on the bottom 11a and the side surfaces of the longitudinal groove of the tire of Comparative Example 5.

The aforesaid Comparison Test 2 wherein the rotation speed of the tire 1 was set at 845 r.p.m. (equivalent to 79.6 km/h) was conducted on both tires of Comparative Example 5 and Example 4 to evaluate the respective characteristics. The measurements of the decrease rate (%) for Comparative Example 5 wherein neither the bottom nor the side surfaces of the groove were treated as having water repellency, are given in Table 6 along with those for Comparative Example 3 and Comparative Example 2. Those for Example 4 wherein the bottom and both side surfaces of the groove were treated as having water repellency is given in Table 7 along with those for Example 2 and Comparative Example 2.

Table 6

|  | Water (cc) | Decrease rate (%) |
|---|---|---|
| Comp. Example 5 | 1640 | 28.5 |

Table 6 (continued)

|  | Water (cc) | Decrease rate (%) |
|---|---|---|
| Comp. Example 3 | 1533 | 33.2 |
| Comp.Ex.2 | 2295 | - |

Table 7

|  | Water (cc) | Decrease rate (%) |
|---|---|---|
| Example 4 | 725 | 68.4 |
| Example 2 | 698 | 69.6 |
| Comp.Ex.2 | 2295 | - |

As seen from the results in Tables 6 and 7, it has been clear that Comparative Example 5 has the ability to discharge water out of the groove similar to that of Comparative Example 3, and Example 4 has that ability similar to that of Example 2. Hence, both Examples can significantly reduce the amount of water which is not discharged out of the groove but is transmitted forward in the rotational direction.

From inspection of Table 6 and 7, it has been clear that on tires having the same wave form, one wherein the water repellent coating film is formed on the bottom and the side surfaces of the groove, exhibits a further enhanced ability to discharge water out of the groove.

## Claims

1. A vehicle tire (1) wherein, of the grooves (11, 12) formed in the tread surface (10) thereof, at least one circumferential groove (11) has a continuously waved bottom surface (11a) which extends partially or entirely around the circumference of the groove (11) and the top of which (11b) does not reach the tread surface (10), characterised in that some or all of the grooves (11, 12) formed in the tread surface (10) of the tire are treated to have water repellency on at least a part of the bottom and/or side surfaces thereof.

2. A tire (1) according to claim 1, wherein the treated grooves include the circumferential groove (11) having the continuously waved bottom surface (11a).

3. A tire (1) according to claim 1 or 2, wherein the waved bottom surface (11a) extends over the entire width of the bottom of the groove (11).

4. A tire (1) according to any preceding claim, wherein the waved bottom surface (11a) is in a form selected from a sine wave form, a square wave form, a chopping wave form and a trapezoidal wave form.

5. A tire (1) according to any preceding claim, wherein the waved bottom surface (11a) has a wave height ranging from 1 to 4 mm and a wave length ranging from 1 to 150 mm.

6. A tire (1) according to any preceding claim, wherein the bottom or side surfaces are treated to have water repellency by forming thereon a coating film containing a water-repellent resin.

7. A tire (1) according to any of claims 1 to 5, wherein the bottom or side surfaces are treated to have water repellency by affixing thereto a sheet containing a water repellent resin.

8. A tire (1) according to any of claims 1 to 5, wherein the bottom or side surfaces are treated to have water repellency by forming a portion to become a groove with a rubber compound containing a water repellent resin when the tire is vulcanized and formed.

**Patentansprüche**

1. Fahrzeugreifen (1), bei dem von den in der Fahrfläche (10) desselben ausgebildete Rillen (11, 12) wenigstens eine umlaufende Rille (11) eine kontinuierlich wellenförmige Bodenfläche (11a) aufweist, die sich teilweise oder vollständig um den Umfang der Rille (11) erstreckt und deren oberer Teil (11b) die Fahrfläche (10) nicht erreicht, dadurch gekennzeichnet, daß einige oder alle der in der Fahrfläche (10) des Reifens ausgebildeten Rillen (11, 12) behandelt werden, um wenigstens auf einem Teil der Boden- und/oder Seitenflächen desselben wasserabweisend zu sein.

2. Reifen (1) gemäß Anspruch 1, bei dem die behandelten Rillen die umlaufende Rille (11) mit der kontinuierlich wellenförmigen Bodenfläche (11a) einschließen.

3. Reifen (1) gemäß Anspruch 1 oder 2, bei dem die wellenförmige Bodenfläche (11a) sich über die gesamte Breite des Bodens der Rille (11) erstreckt.

4. Reifen (1) gemäß einem der vorangegangenen Ansprüche, bei dem die wellenförmige Bodenfläche (11a) in einer Form vorliegt, die aus einer Sinuswellenform, einer Rechteckwellenform, einer abgeschnittenen Wellenform und einer Trapezwellenform ausgewählt ist.

5. Reifen (1) gemäß einem der vorangegangenen Ansprüche, bei dem die wellenförmige Bodenfläche (11a) eine Wellenhöhe in einem Bereich von 1 bis 4 mm und eine Wellenlänge in einem Bereich von 1 bis 150 mm aufweist.

6. Reifen (1) gemäß einem der vorangegangenen Ansprüche, bei dem die Boden- oder Seitenflächen behandelt werden, um wasserabweisend zu sein, indem auf denselben ein Beschichtungsfilm gebildet wird, der einen wasserabweisenden Harz enthält.

7. Reifen (1) gemäß einem der Ansprüche 1 bis 5, bei dem die Boden- oder Seitenflächen behandelt werden, um wasserabweisend zu sein, indem an denselben eine einen wasserabweisenden Harz enthaltende Schicht angebracht wird.

8. Reifen (1) gemäß einem der Ansprüche 1 bis 5, bei dem die Boden- oder Seitenflächen behandelt werden, um wasserabweisend zu sein, indem ein als Rille vorgesehener Abschnitt mit einer einen wasserabweisenden Harz enthaltenden Gummiverbindung behandelt wird, wenn der Reifen vulkanisiert und gebildet wird.

**Revendications**

1. Pneu pour véhicule (1) dans lequel, parmi les rainures (11, 12) formées dans la surface de la bande de roulement (10) de celui-ci, au moins une rainure circonférentielle (11) a une surface de fond ondulée en continu (11a) qui s'étend partiellement ou entièrement sur la circonférence de la rainure (11) et dont la partie supérieure (11b) n'atteint pas la surface de la bande de roulement (10), caractérisé en ce que certaines ou toutes les rainures (11, 12) formées dans la surface de la bande de roulement (10) du pneu sont traitées de manière à repousser l'eau sur au moins une partie de leurs surfaces de fond et/ou de côté.

2. Pneu (1) selon la revendication 1, dans lequel les rainures traitées comprennent la rainure circonférentielle (11) ayant la surface de fond ondulée en continu (11a).

3. Pneu (1) selon la revendication 1 ou 2, dans lequel la surface de fond ondulée (11a) s'étend sur toute la largeur du fond de la rainure (11).

4. Pneu (1) selon l'une quelconque des revendications précédentes, dans lequel la surface de fond ondulée (11a) a une forme choisie parmi une forme d'ondulation sinusoïdale, une forme d'ondulation carrée, une forme d'ondulation brisée et une forme d'ondulation trapézoïdale.

5. Pneu (1) selon l'une quelconque des revendications précédentes, dans lequel la surface de fond ondulée (11a) a une hauteur d'ondulation allant de 1 à 4 mm et une longueur d'ondulation allant de 1 à 150 mm.

6. Pneu (1) selon l'une quelconque des revendications précédentes, dans lequel les surfaces de fond ou de côté sont traitées de manière à repousser l'eau en formant sur celles-ci un film de revêtement contenant une résine hydrophobe.

7. Pneu (1) selon l'une quelconque des revendications 1 à 5, dans lequel les surfaces de fond ou de côté sont traitées de manière à repousser l'eau en fixant sur celles-ci une feuille contenant une résine hydrophobe.

8. Pneu (1) selon l'une quelconque des revendications 1 à 5, dans lequel les surfaces de fond ou de côté sont traitées de manière à repousser l'eau en formant une partie destinée à former une rainure avec un composé caoutchouteux contenant une résine hydrophobe lors de la vulcanisation et la formation du pneu.

F I G. 1

FIG. 2(a)

FIG. 2(b)

FIG. 3 (a)

FIG. 3 (b)

FIG. 3 (c)

FIG. 4 (a)

FIG. 4 (b)

FIG. 5 (a)

FIG. 5 (b)

FIG. 5 (c)

FIG. 5 (d)

F I G. 6

F I G. 7

F I G.  8

F I G. 9

EP 0 686 098 B1